(19) Europäisches Patentamt
European Patent Office
Office européen des brevets

(11) **EP 2 003 615 A1**

(12) **EUROPÄISCHE PATENTANMELDUNG**

(43) Veröffentlichungstag:
**17.12.2008 Patentblatt 2008/51**

(51) Int Cl.:
*G06T 7/00* (2006.01)    *H04N 17/00* (2006.01)

(21) Anmeldenummer: **07110119.0**

(22) Anmeldetag: **12.06.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(71) Anmelder: **Siemens Building Technologies Fire & Security Products GmbH & Co. oHG**
**81679 München (DE)**

(72) Erfinder: **Marbach, Giuseppe**
**8634 Hombrechtikon (CH)**

(74) Vertreter: **Maier, Daniel Oliver et al**
**Siemens AG**
**CT IP Com E**
**Postfach 22 16 34**
**80506 München (DE)**

(54) **Verfahren und Einrichtung zur automatischen Beurteilung der Bildqualität von Videobildern**

(57) Bei einem Verfahren zur automatischen Beurteilung der Bildqualität von Videobildern wird die Bildqualität einer Folge von Bildern über einen bestimmten Zeitraum untersucht, wobei für die Bildqualität typische Bildeigenschaften berechnet werden. Diese Bildeigenschaften werden untereinander abgeglichen, und dieser Vergleich liefert die Basis für die Beurteilung der Bildqualität.

Eine Einrichtung für die automatische Beurteilung der Bildqualität der von einer Kamera (1) gelieferten Videobilder enthält eine Digitalisierungsstufe (2) für die Digitalisierung der Videobilder und eine Auswertestufe (3) für die digitalisierten Videobilder, welche einen Prozessor mit einem Algorithmus für die Bewertung der Bildqualität aufweist. Der Algorithmus enthält einen Prozess (4) für die Gewinnung von Bildeigenschaften, bei dem mindestens zwei der für die Bildqualität typischen Bildeigenschaften Helligkeit, Kontrast, Farbe und Rauschen bestimmt werden, und einen Prozess (5) für die Bestimmung der Beschaffenheit der Bildqualität und deren Bewertung, bei dem aus den genannten Bildeigenschaften für die Bildqualität typische Parameter abgeleitet und bewertet werden.

FIG 1

## Beschreibung

Die vorliegende Erfindung betrifft ein Verfahren zur automatischen Beurteilung der Bildqualität von Videobildern.

Bei typischen CCTV-Anwendungen können die von einer Videokamera gelieferten Bilder auf einem Bildschirm dargestellt und subjektiv auf ihre Qualität hin beurteilt werden, wobei die Bildqualität durch bestimmte Parameter oder Bildeigenschaften bestimmt ist. Da bei der Installation von Hunderten von Videokameras eine solche subjektive Beurteilung der Bildqualität nicht möglich ist, wäre deren automatische Beurteilung sehr hilfreich, damit festgestellt werden kann, ob alle Kameras funktionieren und Bilder von guter Qualität liefern. Die Bildqualität ist aber auch ein geeignetes Kriterium, um Alterung und/oder Verschmutzung einer Kamera, beispielsweise durch Ablagerung von Staub oder anderen Aerosolteilchen auf der Linse, zu erkennen. Hier kann mit Hilde einer Beurteilung der Bildqualität deren zeitliche Abnahme festgestellt und damit eine Alterung und/oder Verschmutzung der betreffenden Videokamera detektiert werden.

Ein weiterer wichtiger mit der Bildqualität und deren Beurteilung zusammen hängender Aspekt ist die Frage, ob und inwieweit ein Bild die für die Anwendung eines bestimmten Bildverarbeitungs-Algorithmus erforderlichen Eigenschaften aufweist. So werden zum Beispiel einige auf Kantendetektion basierende Algorithmen bei geringem Kontrast und/oder geringer Helligkeit unter Umständen nicht richtig arbeiten oder unverhältnismässig viel Fehlalarme liefern. Durch eine automatische Beurteilung der Bildeigenschaften können die genannten Algorithmen bei ungenügenden Bildeigenschaften abgeschaltet werden. Wenn die Algorithmen aktiv bleiben, können durch die automatische Beurteilung der Bildeigenschaften Fehlalarme unterdrückt und es kann eine Statusinformation wie beispielsweise "ungenügende Bildeigenschaften" angezeigt werden.

Durch die Erfindung soll nun ein Verfahren zur automatischen Beurteilung der Bildqualität von Videobildern angegeben werde, welches einerseits die Kontrolle der Funktionstüchtigkeit von Videokameras bei deren Installation und andererseits die Detektion von Verschmutzung/-Alterung von Videokameras ermöglicht. Ausserdem soll das erfindungsgemässe Verfahren es ermöglichen, für bestimmte Bildverarbeitungs-Algorithmen wichtige Bildeigenschaften zu überwachen und auf ungenügende Bildeigenschaften auf geeignete Art zu reagieren.

Die gestellte Aufgabe wird erfindungsgemäss dadurch gelöst, dass die Bildqualität einer Folge von Bildern über einen bestimmten Zeitraum untersucht wird, wobei für die Bildqualität typische Bildeigenschaften berechnet und diese untereinander abgeglichen werden, und dass dieser Vergleich die Basis für die Beurteilung der Bildqualität liefert.

Eine erste bevorzugte Ausführungsform des erfindungsgemässen Verfahrens ist dadurch gekennzeichnet, dass jedes Videobild digitalisiert und auf ein CIF-Bild reduziert wird und in einem Format YUV ist, wobei Y für den Helligkeitswert und Y und V für den Chrominanzwert jedes Pixels stehen. Vorzugsweise werden kritische Pixelregionen maskiert und bei der Berechnung der typischen Bildeigenschaften nur die nachfolgend als aktive Pixel bezeichneten nicht maskierten Pixel berücksichtigt.

Weitere bevorzugte Ausführungsformen des erfindungsgemässen Verfahrens sind in den abhängigen Ansprüchen 4 bis 12 beansprucht.

Die Erfindung betrifft weiter eine Einrichtung für die automatische Beurteilung der Bildqualität der von einer Kamera gelieferten Videobilder. Die erfindungsgemässe Einrichtung ist gekennzeichnet durch eine Digitalisierungsstufe für die Digitalisierung der Videobilder und durch eine Auswertestufe für die digitalisierten Videobilder, welche einen Prozessor mit einem Algorithmus für die Bewertung der Bildeigenschaften aufweist.

Eine erste bevorzugte Ausführungsform der erfindungsgemässen Einrichtung ist dadurch gekennzeichnet, dass der Algorithmus einen im Folgenden als Gewinnung von Bildeigenschaften bezeichneten Prozess enthält, bei dem mindestens zwei der für die Bildqualität typischen Bildeigenschaften Helligkeit, Kontrast, Farbe und Rauschen bestimmt werden.

Eine zweite bevorzugte Ausführungsform der erfindungsgemässen Einrichtung ist dadurch gekennzeichnet, dass der Algorithmus einen im Folgenden als Beschaffenheit der Bildqualität und Bewertung bezeichneten Prozess enthält, bei dem aus den genannten Bildeigenschaften für die Bildqualität typische Parameter abgeleitet und bewertet werden. Vorzugsweise enthält der genannte Prozess eine Zuordnungsfunktion, ein Übereinstimmungs-Kriterium und eine Bewertungsmatrix für jede Bildeigenschaft.

Im Folgenden wird die Erfindung anhand eines Ausführungsbeispiels und der Zeichnungen näher erläutert; es zeigt:

Fig. 1 ein Blockschema einer erfindungsgemässen Einrichtung zur automatischen Beurteilung der Bildqualität der Bilder einer Videokamera; und
Fig. 2, 3 je ein Diagramm zur Funktionserläuterung.

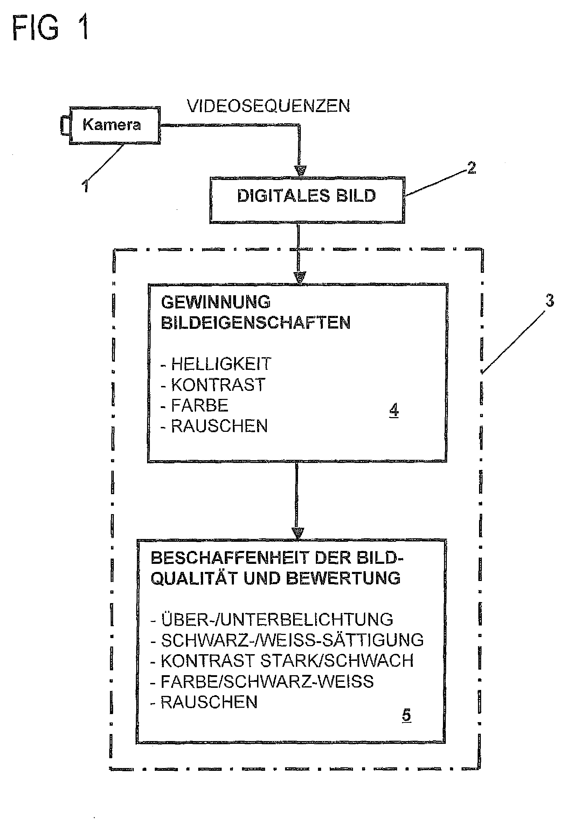

In Fig. 1 ist mit dem Bezugszeichen 1 eine Videokamera bezeichnet, die über einen Ausgang Videosequenzen an eine Stufe 2 liefert, in welcher jedes Bild einer Videosequenz digitalisiert und dann auf ein CIF (Common Interface Format) von 352x288 Pixel reduziert wird. Diese als "down sampling" bekannte Reduktion ist ein Verfahren zur Verringerung der Abtastrate eines Signals zum Zweck einer Reduktion der Datenrate oder Datenmenge. Vom digitalisierten Bild wird angenommen, dass es im Format YUV sei, wobei Y für den Helligkeitswert und U und V für den Chrominanzwert jedes Pixels stehen. Die beiden Bedingungen "down sampling" und YUV-Format sind aber nicht zwingend erforderlich, jede Bildgrösse und jedes Format sind möglich. Das in der Stufe 2 digitalisierte Bild wir anschliessend einer Auswertestufe 3 zugeführt, in welcher die Bildeigenschaften und damit die Bildqualität berechnet werden.

Die Stufen 2 und 3 können in die Kamera 1 integriert oder mit dieser verbunden und sie können am Aufstellungsort der Kamera oder in unmittelbarer Nähe zu diesem oder auch räumlich entfernt von der Kamera vorgesehen sein, wobei im letzteren Fall zwischen Kamera 1 und den Stufen 2 und 3 eine Kommunikationsverbindung besteht. Ebenso kann die Stufe 2 in die Stufe 3 integriert sein. Kritische Pixelregionen können maskiert werden, um sie bei der Berechnung der Bildeigenschaften nicht zu berücksichtigen. Kritische Pixelregionen können beispielsweise durch Überbelichtung infolge von Beleuchtung (Strassenbeleuchtung durch Strassen- oder Autolampen, Schnee, heller Himmel), durch Unterbelichtung (dunkle Fassaden) oder durch Kontrastarmut (homogenes Bild durch Teil des Himmels, Wiese, Fassade von homogener Farbe oder dergleichen) verursacht sein. Die nicht maskierten Pixel werden in dieser Beschreibung als "aktive" Pixel bezeichnet.

Die Auswertestufe 3 enthält einen Prozessor (nicht dargestellt), welcher einen Algorithmus für die Gewinnung von Bildeigenschaften (Stufe 4) und für die Bestimmung der Beschaffenheit der Bildqualität und deren Beurteilung (Stufe 5) aufweist.

In der Stufe 4 für die Gewinnung der Bildeigenschaften werden für jedes Bild die Eigenschaften Schwarz-Sättigung, Weiss-Sättigung, mittlere Helligkeit, Standardabweichung, Kontrast-Gradient, Rauschen in dunklen Bildern und Farbe berechnet:

Schwarz-Sättigung sat_b: Anzahl der aktiven Pixel, deren Y(Helligkeits)-Wert kleiner ist als ein erster Schwellwert $Y_b$ geteilt durch die Gesamtzahl der aktiven Pixel;

Weiss-Sättigung sat_w: Anzahl der aktiven Pixel, deren Y-Wert grösser ist als ein zweiter Schwellwert $Y_w$ geteilt durch die Gesamtzahl der aktiven Pixel;

mittlere Helligkeit mean_L: Mittelwert des Y-Werts der nicht gesättigten aktiven Pixel, d.h. derjenigen Pixel, die weder zu sat_b noch zu sat_w gehören und als aktive Pixel definiert sind;

Standardabweichung std_L: Standardabweichung des für die Berechnung der mittleren Helligkeit mean_L verwendeten Y-Werts;

Kontrast-Gradient grad_L: Anzahl der aktiven Pixel, deren Y-Gradient grösser ist als ein dritter Schwellwert $G_0$, geteilt durch die Anzahl der aktiven Pixel, deren Y-Gradient grösser ist als ein vierter Schwellwert $G_1$, wobei $G_1$ kleiner ist als $G_0$, vorzugsweise um etwa 3 dB;

Rauschen in dunklen Bildern noise_b: Anzahl der aktiven, nicht gesättigten Pixel, deren normierter Y (Helligkeits)-Zeitgradient grösser ist als ein fünfter Schwellwert $G_n$, wobei die Normierung der Mittelwert der Y-Werte zur Zeit t und t-1 ist;

Farbe color_uv: Anzahl der aktiven Pixel, bei denen eine der beiden Komponenten |U-127| oder |V-127| grösser ist als ein sechster Schwellwert $C_r$ geteilt durch die Gesamtzahl der aktiven Pixel.

Die Schwellwerte $Y_b$, $Y_w$, $G_0$, $G_1$, $G_n$ und $C_r$ werden anhand von durch vorgängige Untersuchungen gewonnenen Referenzsequenzen empirisch bestimmt. Eine mögliche Variante für diese empirischen Konstanten sind die folgenden Werte: $Y_b=30$, $Y_w=250$, $G_0=25$, $G_1=32$, $G_n=38$ und $C_r=8$.

Anschliessend wird in der Stufe 5 anhand eines gegenseitigen Abgleichs der Bildeigenschaften die Beschaffenheit der Bildqualität bestimmt und diese bewertet. Zur Bestimmung der Helligkeit, das heisst, ob die Bilder zu hell oder zu dunkel sind und ob der gesättigte Bereich im Vergleich zum Gesichtsfeld zu gross ist, werden die Bildeigenschaften Schwarz-Sättigung (sat_b), Weiss-Sättigung (sat_w) und die mittlere Helligkeit (mean_L) verwendet, was beispielsweise mit Hilfe der folgenden Matrix erfolgen kann:

|  | sat_b | sat_w | \|mean_L-127\| |
|---|---|---|---|
| Bild mit guter Helligkeit | <thr_b | <thr_w | >thr_L |
| Bild zu dunkel | >thr_b | <thr_w | <thr_L |
| Bild zu hell | <thr_b | >the_w | <thr_L |

Dabei sind thr_w, thr_b und thr_L empirisch bestimmte Schwellwerte; beispielsweise ist thr_w = thr_b = 0.20 und thr_L = 60.

Für die Bestimmung des Kontrasts, das heisst, ob die Bilder einen ausreichenden Kontrast und eine ausreichende Schärfe aufweisen und nicht verschwommen oder unscharf sind, werden die Bildeigenschaften Standardabweichung (std_L) und Kontrast-Gradient (grad_L) verwendet, wobei die Entscheidung des Algorithmus beispielsweise nach der folgenden Matrix erfolgt:

|  | std_L | grad_L |
|---|---|---|
| Bild mit gutem Kontrast | >thr_s | >thr_g |
| Bild mit schwachem Kontrast | <thr_s | <thr_g |
| Bild mit wenig Strukturen | >the_s | <thr_g |

Dabei sind thr_s und thr_g empirisch gesetzte Schwellwerte; beispielsweise gilt thr_s = 0.16 und thr_g = 0.64.

Rauschen in dunklen Bildern (noise_b) wird für die Bestimmung, ob ein dunkles Bild zu starkes Rauschen enthält, verwendet. Wenn noise_b grösser ist als ein empirischer Schwellwert thr_n mit dem Wert von beispielsweise 0.75, dann wir das betreffende Bild als verrauscht klassiert.

Die Bildeigenschaft Farbe (color_uv) wird verwendet, um das Vorhandensein von Farbe oder einer ausreichenden Farbskala (dem Fachmann unter dem Begriff "Gamut" bekannt) im Bild zu beurteilen. Wenn color_uv kleiner ist als ein empirisch bestimmter Schwellwert thr_c mit dem wert von beispielsweise 0.1, dann wird das Bild als Schwarz-Weiss-Bild oder als Bild mit unzureichender Farbskala (Gamut) klassiert.

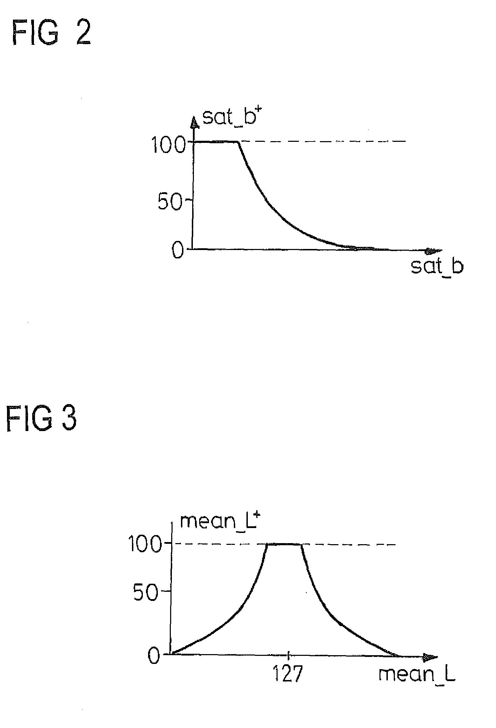

Bei der realen Implementierung erfolgt die Bestimmung der Bildqualität nicht mit einfachen Entscheidungsmatrizen der angegebenen Art, sondern in einem ersten Schritt mit Hilfe einer Zuordnungsfunktion der Bildeigenschaften auf einer Skala von 0 bis 100 (siehe Fig. 2 und 3) und in einem zweiten Schritt mit Hilfe eines Übereinstimmungs-Kriteriums für jede Kategorie von Bildeigenschaften.

Die Fig. 2 und 3 zeigen je ein Beispiel der Zuordnungsfunktion für die Bildeigenschaft sat_b beziehungsweise mean_L. Auf der Ordinate ist jeweils die von 0 bis 100 reichende Skala sat_b* beziehungsweise mean_L* eingetragen und auf der Abszisse die jeweiligen aktuellen Werte der Bildeigenschaften sat_b beziehungsweise mean_L.

Das Übereinstimmungskriterium für die Helligkeit lautet wie folgt:

$$\mathit{Helligkeit} = \mathtt{minimum(sat\_b*, \ sat\_w*, \ mean\_L*)}$$

wobei sat_b*, sat_w* und mean_L* die Zuordnungswerte von sat_b, sat_w und mean_L sind.

Alle Werte sat_b, sat_w und mean_L werden dem Bereich 0-100 zugeordnet, wobei 0 einen schlechten Bildzustand und 100 einen guten Bildzustand bedeutet, so dass die Helligkeit ebenfalls einen Wert zwischen 0 und 100 hat, welcher den Helligkeitszustand des Bildes angibt, 0 für schlecht und 100 für gut.

Ausserdem wird eine Bewertungsmatrix für die einzelnen Bildeigenschaften definiert, für die Helligkeit beispielsweise die folgende:

| Wert für *Helligkeit* | 0 - 35 | 36 - 64 | 65 - 100 |
|---|---|---|---|
| Bewertung | schlecht | ausreichend | gut |

Für jede der anderen Bildeigenschaften wird ein ähnlicher Prozess mit Zuordnung, Übereinstimmungs-Kriterium und Bewertung durchgeführt.

**Patentansprüche**

**1.** Verfahren zur automatischen Beurteilung der Bildqualität von Videobildern, **dadurch gekennzeichnet, dass** die Bildqualität einer Folge von Bildern über einen bestimmten Zeitraum untersucht wird, wobei für die Bildqualität typische Bildeigenschaften berechnet und diese Bildeigenschaften untereinander abgeglichen werden, und dass dieser Vergleich die Basis für die Beurteilung der Bildqualität liefert.

**2.** Verfahren nach Anspruch 1, **dadurch gekennzeichnet, dass** jedes Videobild digitalisiert und auf ein CIF-Bild reduziert wird und in einem Format YUV ist, wobei Y für den Helligkeitswert und Y und V für den Chrominanzwert jedes Pixels stehen.

**3.** Verfahren nach Anspruch 1 oder 2, **dadurch gekennzeichnet, dass** kritische Pixelregionen maskiert und bei der Berechnung der typischen Bildeigenschaften nur die nachfolgend als aktive Pixel bezeichneten nicht maskierten Pixel berücksichtigt werden.

**4.** Verfahren nach Anspruch 3, **dadurch gekennzeichnet, dass** die typischen Bildeigen-schaften mindestens zwei der Parameter Helligkeit, Kontrast, Farbe und Rauschen umfassen.

**5.** Verfahren nach Anspruch 4, **dadurch gekennzeichnet, dass** die typischen Bildeigen-schaften mindestens zwei der Parameter Schwarz-Sättigung, Weiss-Sättigung, mittlere Helligkeit und deren Standardabweichung, Kontrast-Gradient, Rauschen und Farbe umfassen.

**6.** Verfahren nach Anspruch 5, **dadurch gekennzeichnet, dass** die Bildeigenschaft Schwarz-Sättigung als Anzahl der aktiven Pixel definiert ist, deren Helligkeits-Wert kleiner ist als ein erster Schwellwert geteilt durch die Gesamtzahl der aktiven Pixel, dass die Bildeigenschaft Weiss-Sättigung als Anzahl der aktiven Pixel definiert ist, deren Helligkeits-Wert grösser ist als ein zweiter Schwellwert geteilt durch die Gesamtzahl der aktiven Pixel, und dass die Bildeigen-schaft mittlere Helligkeit definiert ist als der Mittelwert des Helligkeits-Werts der nicht gesättigten aktiven Pixel, das sind diejenigen Pixel, die weder zur Schwarz-Sättigung noch zur Weiss-Sättigung gehören und als aktive Pixel definiert sind.

**7.** Verfahren nach Anspruch 6, **dadurch gekennzeichnet, dass** die Bildeigenschaft Standardabweichung als die Standardabweichung des für die Berechnung der mittleren Helligkeit verwendeten Helligkeitswerts definiert ist, dass die Bildeigenschaft Kontrast-Gradient als Anzahl der aktiven Pixel definiert ist, deren Helligkeits-Gradient grösser ist als ein dritter Schwellwert geteilt durch die Anzahl der aktiven Pixel, deren Helligkeits-Gradient grösser ist als ein vierter Schwellwert, welcher kleiner ist als der dritte Schwellwert, dass die Bildeigenschaft Rauschen in dunklen Bildern als Anzahl der aktiven, nicht gesättigten Pixel definiert ist, deren normierter Helligkeits-Zeitgradient zur Zeit t grösser ist als ein fünfter Schwellwert, und dass die Bildeigenschaft Farbe als Anzahl der aktiven Pixel definiert ist, bei denen eine der beiden Komponenten |U-127| oder |V-127| grösser ist als ein sechster Schwellwert geteilt durch die Gesamtzahl der aktiven Pixel.

**8.** Verfahren nach den Ansprüchen 6 und 7, **dadurch gekennzeichnet, dass** die genannten Schwellwerte anhand von durch vorgängige Untersuchungen gewonnenenen Referenzsequenzen empirisch bestimmt werden und vorzugsweise die folgenden Werte aufweisen: erster Schwellwert = 30, zweiter Schwellwert = 250, dritter Schwellwert = 25, vierter Schwellwert = 32, fünfter Schwellwert = 38 und sechster Schwellwert = 8.

**9.** Verfahren nach Anspruch 8, **dadurch gekennzeichnet, dass** für die Bestimmung der Beschaffenheit der Bildqualität die Bildeigenschaften gegenseitig abgeglichen werden, wobei die Helligkeit des Bildes aus den Bildeigenschaften Schwarz-Sättigung, Weiss-Sättigung und mittlere Helligkeit und der Kontrast des Bildes aus den Bildeigenschaften Standardabweichung und Kontrast-Gradient ermittelt wird.

**10.** Verfahren nach Anspruch 9, **dadurch gekennzeichnet, dass** die Bildeigenschaft Rauschen in dunklen Bildern für die Bestimmung, ob ein dunkles Bild zu starkes Rauschen enthält, verwendet wird, und dass die Bildeigenschaft Farbe verwendet wird, um das Vorhandensein von Farbe oder eine ausreichende Farbskala (Gamut) im Bild zu beurteilen.

**11.** Verfahren nach Anspruch 10, **dadurch gekennzeichnet, dass** die Bestimmung der Beschaffenheit der Bildqualität mit Hilfe von Entscheidungsmatrizen erfolgt.

**12.** Verfahren nach Anspruch 10, **dadurch gekennzeichnet, dass** die Bestimmung der Beschaffenheit der Bildqualität mit Hilfe einer Zuordnungsfunktion der Bildeigenschaften auf einer Skala und mit Hilfe eines Übereinstimmungs-Kriteriums für jede Kategorie von Bildeigenschaften erfolgt, und dass für jede Bildeigenschaft eine Bewertungsmatrix definiert wird.

**13.** Einrichtung für die automatische Beurteilung der Bildqualität der von einer Kamera (1) gelieferten Videobilder, **gekennzeichnet durch** eine Digitalisierungsstufe (2) für die Digitalisierung der Videobilder und **durch** eine Auswertestufe (3) für die digitalisierten Videobilder, welche einen Prozessor mit einem Algorithmus für die Bewertung der Bildqualität aufweist.

14. Einrichtung nach Anspruch 13, **dadurch gekennzeichnet, dass** der Algorithmus einen im Folgenden als Gewinnung von Bildeigenschaften (4) bezeichneten Prozess enthält, bei dem mindestens zwei der für die Bildqualität typischen Bildeigenschaften Helligkeit, Kontrast, Farbe und Rauschen bestimmt werden.

15. Einrichtung nach Anspruch 14, **dadurch gekennzeichnet, dass** der Algorithmus einen im Folgenden als Beschaffenheit der Bildqualität und Bewertung (5) bezeichneten Prozess enthält, bei dem aus den genannten Bildeigenschaften für die Bildqualität typische Parameter abgeleitet und bewertet werden.

16. Einrichtung nach Anspruch 15, **dadurch gekennzeichnet, dass** der Prozess Beschaffenheit der Bildqualität und Bewertung (5) eine Zuordnungsfunktion, ein Übereinstimmungs-Kriterium und eine Bewertungsmatrix für jede Bildeigenschaft enthält.

# FIG 1

VIDEOSEQUENZEN

Kamera

1

DIGITALES BILD

2

3

GEWINNUNG
BILDEIGENSCHAFTEN

- HELLIGKEIT
- KONTRAST
- FARBE
- RAUSCHEN

4

BESCHAFFENHEIT DER BILD-
QUALITÄT UND BEWERTUNG

- ÜBER-/UNTERBELICHTUNG
- SCHWARZ-/WEISS-SÄTTIGUNG
- KONTRAST STARK/SCHWACH
- FARBE/SCHWARZ-WEISS
- RAUSCHEN

5

FIG 2

FIG 3

**Europäisches Patentamt**

# EUROPÄISCHER RECHERCHENBERICHT

Nummer der Anmeldung

EP 07 11 0119

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | MURINO V ET AL: "Real-time adaptive regulation of a visual camera for automatic investigation of changing environments" INDUSTRIAL ELECTRONICS, CONTROL, AND INSTRUMENTATION, 1993. PROCEEDINGS OF THE IECON '93., INTERNATIONAL CONFERENCE ON MAUI, HI, USA 15-19 NOV. 1993, NEW YORK, NY, USA,IEEE, 15. November 1993 (1993-11-15), Seiten 1633-1638, XP010109265 ISBN: 0-7803-0891-3 * Seite 1633, linke Spalte, Zeile 1 - Seite 1636, rechte Spalte, letzter Absatz * | 1-16 | INV. G06T7/00 H04N17/00 |
| X | EP 1 739 982 A (HASSELBLAD AS [DK]) 3. Januar 2007 (2007-01-03) * Spalte 2, Zeile 37 - Spalte 5, letzte Zeile * | 1-16 | |
| X | EP 1 519 314 A (SIEMENS BUILDING TECH AG [CH]) 30. März 2005 (2005-03-30) | 13-16 | RECHERCHIERTE SACHGEBIETE (IPC) |
| A | | 1-12 | G06T H04N |
| X | WO 2005/055618 A (AGENCY FOR SCIENCE TECHNOLOGY [SG]; ONG EE PING [SG]; YANG XIAOKANG [S) 16. Juni 2005 (2005-06-16) * Seite 14, Zeile 7 - Seite 18, Zeile 15; Abbildungen 6-10 * | 1-16 | |
| X | US 2003/086001 A1 (ZEIDLER DAVID E [US]) 8. Mai 2003 (2003-05-08) * Seite 2, Absatz 15 - Absatz 18; Abbildungen 1-3 * | 1,13 | |

-/--

Der vorliegende Recherchenbericht wurde für alle Patentansprüche erstellt

| Recherchenort | Abschlußdatum der Recherche | Prüfer |
|---|---|---|
| München | 12. Oktober 2007 | Schinnerl, Arnold |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........
& : Mitglied der gleichen Patentfamilie, übereinstimmendes Dokument

EPO FORM 1503 03.82 (P04C03)

**Europäisches**
**Patentamt**

## EUROPÄISCHER RECHERCHENBERICHT

Nummer der Anmeldung

EP 07 11 0119

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2004/043054 A (LAB FOR INFORMATION TECHNOLOGY [SG]; LU ZHONGKANG [SG]; LIN WEISI [SG]) 21. Mai 2004 (2004-05-21) * Seite 12, Zeile 27 - Seite 17, Zeile 5; Abbildungen 4-7 *<br>----- | 1,13 | |
| | | | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| München | 12. Oktober 2007 | Schinnerl, Arnold |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

........................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 07 11 0119

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-10-2007

| Im Recherchenbericht angeführtes Patentdokument | | Datum der Veröffentlichung | Mitglied(er) der Patentfamilie | | Datum der Veröffentlichung |
|---|---|---|---|---|---|
| EP 1739982 | A | 03-01-2007 | US | 2007014542 A1 | 18-01-2007 |
| EP 1519314 | A | 30-03-2005 | AU | 2004212530 A1 | 14-04-2005 |
| | | | CN | 1658247 A | 24-08-2005 |
| | | | SG | 110215 A1 | 28-04-2005 |
| | | | US | 2005162516 A1 | 28-07-2005 |
| WO 2005055618 | A | 16-06-2005 | EP | 1692876 A1 | 23-08-2006 |
| US 2003086001 | A1 | 08-05-2003 | KEINE | | |
| WO 2004043054 | A | 21-05-2004 | AU | 2002347754 A1 | 07-06-2004 |
| | | | BR | 0215934 A | 16-08-2005 |
| | | | EP | 1563459 A2 | 17-08-2005 |
| | | | JP | 2006505853 T | 16-02-2006 |
| | | | MX | PA05004956 A | 20-09-2005 |
| | | | US | 2006233442 A1 | 19-10-2006 |

EPO FORM P0461

Für nähere Einzelheiten zu diesem Anhang : siehe Amtsblatt des Europäischen Patentamts, Nr.12/82